# FASCICULE DE BREVET EUROPEEN

(11) **EP 1 607 256 B1**
(45) Date de publication et mention de la délivrance du brevet: **05.11.2008**
(21) Numéro de dépôt: 05300206.9
(22) Date de dépôt: 22.03.2005
(51) Int. Cl.: B60J 7/00

(54) **Véhicule comportant un dispositif d'occultation escamotable**
Fahrzeug mit einer einziehbaren Abdeckungseinrichtung
Vehicle with a device of retractable blind

(30) Priorité: 19.04.2004 FR 0404070
(43) Date de publication de la demande: 21.12.2005
(73) Titulaire: Peugeot Citroën Automobiles S.A., 78140 Vélizy Villacoublay (FR)
(72) Inventeur: Pezeril, Stéphane, Sèvres, 92310 (FR)
(74) Mandataire: Fernandez, Francis Lionel

(56) Documents cités:
- US-A1- 2003 006 630
- US-A1- 2003 193 218
- US-A1- 2004 040 676
- US-B1- 6 186 587
- US-B1- 6 386 626
- US-B2- 6 513 864

## Description

L'invention se rapporte à un véhicule comportant un dispositif d'occultation escamotable, tel qu'un rideau, pour occulter une ouverture ménagée dans sa carrosserie et plus particulièrement dans son pavillon.

De manière connue, les carrosseries des véhicules automobiles ou routiers comportent aujourd'hui de plus en plus de surfaces vitrées et en particulier les toits encore appelés pavillons des véhicules qui tendent à être équipée de panneaux de verre de larges dimensions.

La présence d'importantes surfaces vitrées a pour inconvénient, de provoquer en cas d'ensoleillement, une très forte élévation de la température à l'intérieur de l'habitacle par effet de serre.

Les constructeurs ont donc recherché des solutions pour limiter cette augmentation des températures dans un habitacle fortement vitré. Des matériaux athermiques ont ainsi été développés pour réaliser ces panneaux vitrés. Ces matériaux demeurent toutefois chers et ne parviennent pas à empêcher tout effet de serre.

Une solution relativement simple et efficace consiste à munir les surfaces vitrées de systèmes d'occultation de la lumière.

L'occultation d'un panneau de verre s'effectue classiquement par déploiement d'un rideau ou encore d'un ensemble de lamelles ou de panneaux jointifs.

Ces systèmes d'occultation guidés le long de rails appropriés se déplient et se replient généralement sous l'action de moyens de manoeuvre motorisés pilotés.

En position déployée, l'extrémité libre du système d'occultation peut venir pénétrer dans un jeu prédéterminé ménagé entre le panneau vitré et un élément de garniture intérieur venant par ailleurs masquer la liaison entre le panneau vitré et la carrosserie. Aujourd'hui un tel jeu peu esthétique tend à disparaître.

Une autre solution revient à venir appuyer l'extrémité libre du système d'occultation contre l'élément de garniture intérieur. Compte tenu de la taille des surfaces à occulter qui font pratiquement tout la largeur du pavillon, la surface d'appui du système d'occultation est très importante et il est difficile compte tenu des dispersions de fabrication de garantir une surface parfaitement correspondante à celle de la garniture intérieure pour permettre un appui sans jour et ce d'autant plus que la garniture intérieure tend à être profilée.

La présente invention a donc pour objet de proposer un véhicule adapté permettant un appareillement étroit entre l'habillage intérieur et les moyens d'occultation lorsque ces derniers sont en position déployée et ce, quelles que soient les dispersions dimensionnelles de ces pièces.

Le véhicule selon l'invention comporte une carrosserie présentant une ouverture fermée par un panneau coopérant avec des moyens d'occultation mobiles, tel qu'un rideau, entre deux positions extrêmes respectivement escamotée et déployée.

Selon l'invention, le véhicule est caractérisé en ce qu'en position extrême déployée, le bord transversal libre des moyens d'occultation vient en appui contre un premier élément de garniture intérieure s'étendant dans l'habitacle du véhicule, ce premier élément de garniture intérieure étant conformé pour être déplaçable entre une position de repos et une position de travail correspondant à la position déployée des moyens d'occultation, et en ce que ce premier élément de garniture intérieure coopère avec un second élément de garniture intérieure, ce second élément de garniture intérieure étant conformé pour masquer la zone de contact entre le premier élément de garniture intérieure et les moyens d'occultation lorsque ces derniers se trouvent en position déployée.

Selon une autre caractéristique du véhicule objet de la présente invention, l'ouverture est ménagée dans le pavillon et en ce que les premier et second élément de garniture intérieure forment l'habillage intérieur de la traverse avant.

Selon une autre caractéristique du véhicule objet de la présente invention, cet habillage intérieur constitue une structure continue concave creuse s'étendant selon l'axe longitudinal du véhicule depuis sensiblement le pare-brise jusqu'au panneau.

Selon une autre caractéristique du véhicule objet de la présente invention, ladite structure formant l'habillage de la traverse avant a une forme d'aile d'avion comportant un fond sensiblement plat et des bords relevés rentrants.

Selon une autre caractéristique du véhicule objet de la présente invention, le premier élément de garniture intérieure forme, dans sa position de repos, la partie supérieure de l'un des bords relevés rentrants de la structure formant l'habillage de la traverse avant.

Selon une autre caractéristique du véhicule objet de la présente invention, le premier élément est distinct du second élément, ce premier élément est monté coulissant sur le second élément et est soumis à l'action de moyens élastiques de rappel.

Selon une autre caractéristique du véhicule objet de la présente invention, le premier élément est distinct du second élément, ce premier élément est monté à rotation sur le second élément et est soumis à l'action de moyens élastiques de rappel.

Selon une autre caractéristique du véhicule objet de la présente invention, le premier élément est distinct du second élément et le premier élément est réalisé en matériau élastique.

Selon une autre caractéristique du véhicule objet de la présente invention, le premier élément et le second élément forment une unique pièce réalisée matériau élastique.

Selon une autre caractéristique du véhicule objet de la présente invention les moyens d'occultation coopèrent avec des moyens de manoeuvre motorisés pilotés.

D'autres particularités et avantages apparaîtront à la lecture de la description ci-après d'un mode de réalisation de l'invention donnée à titre d'exemple non limitatif, description faite en référence aux dessins annexés sur lesquels :
- la figure 1 représente une vue partielle, de dessus, d'un toit de véhicule automobile équipé d'un rideau de toit escamotable selon l'invention.
- la figure 2 représente une vue partielle en coupe longitudinale du toit représenté à la figure 1.
- la figure 3 est une vue similaire à la figure 2 précisant le fonctionnement du dispositif selon l'invention.

Pour des raisons de clarté, les mêmes éléments portent les mêmes références d'une figure à l'autre. De même, seuls les éléments essentiels pour la compréhension de l'invention ont été représentés et ceci sans nécessairement respecter la même échelle.

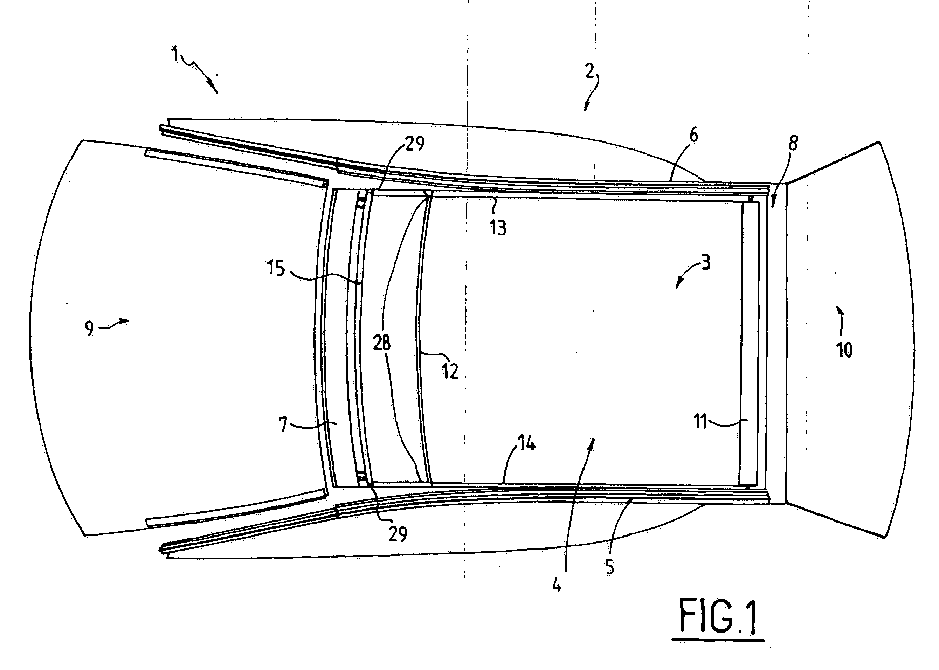

La figure 1 montre un véhicule automobile référencé 1 dont le toit ou pavillon 2 duquel a été ménagée une large ouverture 3 destinée à recevoir un panneau vitré 4.

Bien évidemment à la place du panneau vitré fixe 4 représenté à la figure 1 on pourrait considérer de façon similaire un panneau vitré mobile et en particulier un panneau pour toit ouvrant.

L'ouverture 3 est délimitée par quatre éléments de structure de carrosserie, à savoir deux éléments longitudinaux appelés arcs de pavillons respectivement 5 et 6 et deux éléments transversaux, la traverse avant 7, séparant le pare-brise 9 du pavillon 2, et la traverse arrière 8, séparant le pavillon 2 de la lunette arrière 10. Les différents éléments de carrosserie 5 à 8 sont conformés pour recevoir le panneau vitré 4 lequel est fixé par collage sur ces éléments structurels.

Un occulteur 11 est prévu à l'intérieur du véhicule pour s'étendre sous le panneau vitré 4 et empêcher la lumière de pénétrer dans l'habitacle. Cet occulteur 11 de type rideau en toile tissée pourrait également être de type à lamelles ou encore à panneaux.

Ce rideau 11 est déplaçable par des organes de manoeuvre pilotés également connus et non figurés. Sous l'action de ces moyens de manoeuvre, le rideau 11 se déplace entre une position extrême déployée où le rideau 11 masque le panneau vitré 4 aux occupants et une position extrême repliée où le rideau est alors entièrement escamoté, par exemple dans un réceptacle non figuré situé sous la traverse arrière 8 du véhicule et masqué par une garniture intérieure adaptée. De tels organes de manoeuvre de l'occulteur 11 comprennent par exemple un moto réducteur et un système de câbles de renvoi.

Pour permettre au rideau 11 de se déployer parallèlement à la surface vitrée 4, il est prévu des moyens de guidage tels que des rails 13 et 14 portés respectivement par les arcs de pavillons 5 et 6.

Le rideau 11 est constitué, par exemple, d'une toile tissée souple fixée à une ou plusieurs traverses rigides telles que des arceaux ou des baleines. En particulier, le rideau 11 comporte une baguette transversale 12 fixée à l'extrémité libre du rideau et dont les extrémités latérales sont pourvues chacune d'un coulisseau coopérant respectivement avec l'un des rails de guidage 13 et 14.

Cette baguette 12 est adaptée pour venir en appui contre un élément de garniture intérieure 15 s'étendant transversalement dans l'habitacle pour masquer aux occupants la traverse avant 7.

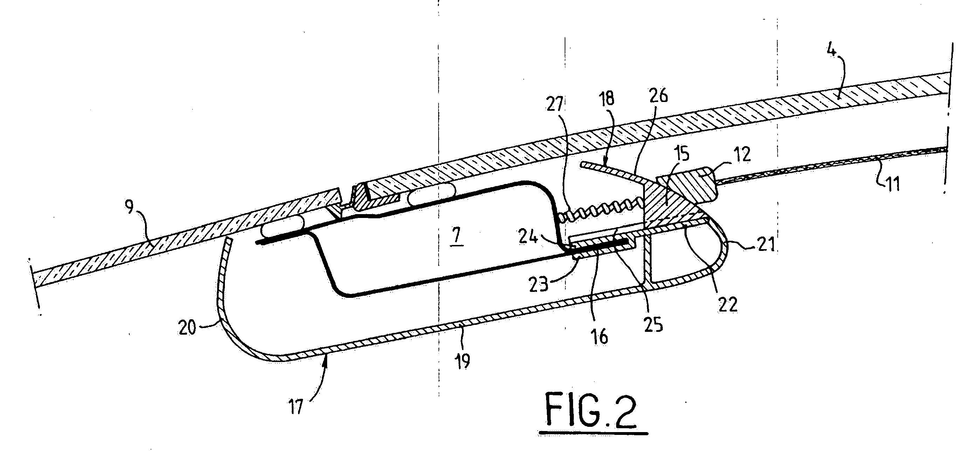

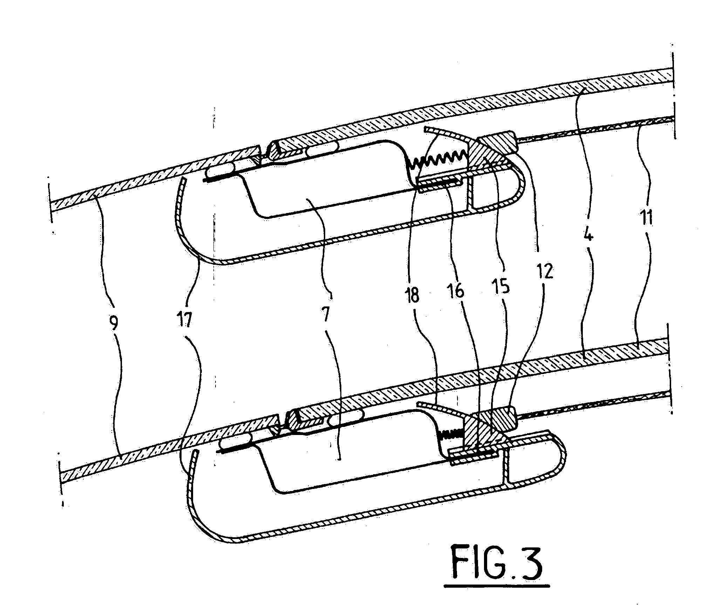

Comme cela est représenté sur les figures 2 et 3, la garniture 15 formant l'habillage intérieur de la traverse avant 7 constitue une structure continue concave creuse s'étendant depuis sensiblement le pare-brise jusqu'au panneau vitré 4. Cette structure 15 est fixée directement sur la traverse avant 7.

Cette traverse 7 qui formée par une poutre creuse de forme sensiblement parallélépipédique présente sur son bord inférieur tourné vers l'habitacle une feuillure 16 s'étendant en saillie tout le long le long de la traverse 7 pour le montage de la garniture 15.

La garniture 15 réalisé en deux parties, comporte un corps fixe 17 oblong venu de moulage sur lequel est montée coulissant une lame mobile 18 également venue de moulage. Cette lame mobile 18 est destinée à faire face à la baguette 12 du rideau occulteur 11 et à se déplacer sous l'action de ce dernier.

Le corps 17 entoure la traverse 7 sur trois côtés. Il comporte un fond plat 19 et deux bords latéraux relevés 20 et 21. Le bord 20 légèrement bombé remonte pratiquement jusqu'au droit du pare-brise 9 tandis que le bord 21 également arrondi remonte, lui, de façon rentrante en direction du panneau vitré 4 et ce, jusqu'au niveau de la feuillure 16 de la traverse 7.

Le bord 21 se termine par une tablature rentrante 22 qui s'étend sensiblement parallèlement au fond 19. Cette tablature 22 se termine par un logement 23 délimitées par deux lèvres, ce logement étant destiné à accueillir la feuillure 16 de la traverse avant 7 et permettre ainsi le montage de la garniture 15 sur la traverse 7.

La tablature 22 comporte sur sa face supérieure 24, dirigée vers le panneau vitré 4, des rainures 25 par exemple en queue d'aronde permettant le montage à coulissement de la lame mobile 18 et servant également de butée axiale à cette dernière.

La lame mobile 18 présente une surface extérieure latérale arrondie 26 prolongeant le bord 21 en direction du panneau vitré 4. La lame mobile 18 comporte par ailleurs sur sa face inférieure des formes 27 complémentaires des rainures 25 pour permettre l'assemblage de la lame mobile 18 sur le corps 17 et son guidage en translation.

Des ressorts 27 formant des moyens élastiques de rappel sont disposés entre la lame mobile 18 et la traverse 7. Ces ressorts 27 peuvent par exemple être formés par des tiges métalliques soudées au corps de la traverse 7 ou encore des ressorts hélicoïdaux tels que ceux figurés sur les dessins annexés.

La lame 18 est ainsi apte à se déplacer entre une position de repos où les ressorts 27 forcent la lame 18 contre le corps 17 et où la surface 26 prolonge parfaitement le bord 21, et une position en retrait où la lame 18 vient en appui contre la traverse 7 en comprimant les ressorts 27.

La position en retrait est provoquée par l'action de la barrette 12 qui vient en appui contre la surface 26 de la lame 18 lors du déploiement du rideau occulteur 4 et qui sous l'action des moyens de manoeuvre, force la lame 18 à reculer contre l'action antagoniste des moyens de rappel 27.

La lame 18 étant en position de retrait, la zone de contact entre la lame 18 et la barrette 12 est alors masquée des occupants par le bord rentrant 21. De la sorte les éventuels jours entre la barrette 12 et la surface 26 du fait des dispersions de fabrication ne sont pas visibles des occupants du véhicule.

Pour favoriser l'accostage entre la barrette 12 et la lame 18, on peut prévoir des tétons 28 portés par la barrette 12, par exemple au niveau des coulisseaux, et destinés à pénétrer des évidements 29 correspondants portés par la lame 18.

On comprend donc aisément que l'invention, tout en étant de structure simple et peu coûteuse, permet réaliser un rideau escamotable ayant un appareillement amélioré de son bord libre avec l'habillage intérieur du pavillon par rapport à l'art antérieur. Bien entendu, la présente invention n'est pas limitée au mode de réalisation que l'on vient de décrire, et on peut apporter à ceux-ci de nombreux changements et modifications sans sortir de la présente invention.

Ainsi, l'invention concerne n'importe quelle garniture intérieure 15 qui peut masquer la zone de contact avec le rideau occulteur 11 lorsque la barrette 12 vient au contact de la surface corresponde 26 de la garniture 15. Ainsi la lame 18 peut être montée pivotante et basculer sous l'action de la barrette 12. Ainsi la lame 18 peut être fixe mais réalisée sous la forme de matériau élastique et se déformer sous l'action de la barrette 12. Ainsi la lame 18 peut faire corps avec la partie 17 de la garniture 15, cette pièce étant alors réalisée en matériau élastique.

## Revendications

1. Véhicule comportant une carrosserie (2) présentant une ouverture (3) fermée par un panneau (4) coopérant avec des moyens d'occultation (11) mobiles entre deux positions extrêmes respectivement escamotée et déployée, **caractérisé en ce qu'**en position extrême déployée, le bord libre (12) desdits moyens d'occultation (11) vient en appui contre un premier élément de garniture intérieure (18) s'étendant dans l'habitacle du véhicule, ledit premier élément (18) étant conformé pour être déplaçable entre une position de repos et une position de travail correspondant à la position déployée desdits moyens d'occultation (11), et **en ce que** ledit premier élément (18) coopère avec un second élément de garniture intérieure (17), ledit second élément étant conformé pour masquer la zone de contact entre ledit premier élément et lesdits moyens d'occultation lorsque ces derniers se trouvent en position déployée.

2. Véhicule selon la revendication 1, **caractérisé en ce que** ladite ouverture (3) est ménagée dans le pavillon (2) et **en ce que** lesdits premier et second éléments (17,18) forment l'habillage intérieur (15) de la traverse avant (7).

3. Véhicule selon la revendication 2, **caractérisé en ce que** ledit habillage constitue une structure continue concave creuse (15) s'étendant depuis sensiblement le pare-brise (9) jusqu'au panneau (4).

4. Véhicule selon la revendication 3, **caractérisé en ce que** ladite structure (15) a une forme d'aile d'avion comportant un fond sensiblement plat (19) et des bords relevés rentrants (20, 21, 26).

5. Véhicule selon la revendication 4, **caractérisé en ce que** ledit premier élément (18) forme la partie supérieure de l'un desdits bords relevés rentrants (26).

6. Véhicule selon l'une quelconque des revendications 2 à 4, **caractérisé en ce que** ledit premier élément (18) est distinct dudit second élément (17), **en ce que** ledit premier élément (18) est monté coulissant sur ledit second élément (17) et **en ce que** ledit premier élément (18) est soumis à l'action de moyens élastiques de rappel (27).

7. Véhicule selon l'une quelconque des revendications 2 à 4, **caractérisé en ce que** ledit premier élément (18) est distinct dudit second élément (17), **en ce que** ledit premier élément (18) est monté à rotation sur ledit second élément (17) et **en ce que** ledit premier élément (18) est soumis à l'action de moyens élastiques de rappel (27).

8. Véhicule selon l'une quelconque des revendications 2 à 4, **caractérisé en ce que** ledit premier élément (18) est distinct dudit second élément (17), **en ce que** ledit premier élément (18) est réalisé en matériau élastique.

9. Véhicule selon l'une quelconque des revendications 2 à 4, **caractérisé en ce que** ledit premier élément (18) et ledit second élément (17) forment une unique pièce réalisée matériau élastique.

10. Véhicule selon l'une quelconque des revendications 2 à 7, **caractérisé en ce que** lesdits moyens d'occultation coopèrent avec des moyens de manoeuvre motorisés pilotés.

## Claims

1. Vehicle comprising bodywork (2) with an opening (3) closed by a panel (4) collaborating with blind means (11) that can move between two extreme positions, a retracted and a deployed position respectively, **characterized in that**, in the deployed extreme position, the free edge (12) of the said blind means (11) rests against a first interior trim element (18) extending into the cabin of the vehicle, the said first element (18) being designed to be movable between a rest position and a work position corresponding to the deployed position of the said blind means (11), and **in that** the said first element (18) collaborates with a second interior trim element (17), the said second element being shaped to hide the area of contact between the said first element and the said blind means when the latter are in their deployed position.

2. Vehicle according to Claim 1, **characterized in that** the said opening (3) is made in the roof (2) and **in that** the said first and second elements (17, 18) form the interior trim (15) of the front crossmember (7).

3. Vehicle according to Claim 2, **characterized in that** the said trim constitutes a hollow concave continuous structure (15) extending substantially from the windscreen (9) as far as the panel (4).

4. Vehicle according to Claim 3, **characterized in that** the said structure (15) is in the shape of an aerofoil with a substantially flat bottom (19) and re-entrant turned-up edges (20, 21, 26).

5. Vehicle according to Claim 4, **characterized in that** the said first element (18) forms the upper part of one of the said re-entrant turned-up edges (26).

6. Vehicle according to any one of Claims 2 to 4, **characterized in that** the said first element (18) is distinct from said second element (17), **in that** the said first element (18) is slidably mounted on the said second element (17), and **in that** the said first element (18) is subject to the action of elastic return means (27).

7. Vehicle according to any one of Claims 2 to 4, **characterized in that** the said first element (18) is distinct from the said second element (17), **in that** the said first element (18) is mounted so that it can rotate on the said second element (17), and **in that** the said first element (18) is subject to the action of elastic return means (27).

8. Vehicle according to any one of Claims 2 to 4, **characterized in that** the said first element (18) is distinct from the said second element (17), and **in that** the said first element (18) is made of an elastic material.

9. Vehicle according to any one of Claims 2 to 4, **characterized in that** the said first element (18) and the said second element (17) form a single component made of an elastic material.

10. Vehicle according to any one of Claims 2 to 7, **characterized in that** the said blind means collaborate with controlled motorized operating means.

## Patentansprüche

1. Fahrzeug mit einer Karosserie (2), die eine Öffnung (3) aufweist, die durch eine Tafel (4) geschlossen ist, die mit Verdunkelungsmitteln (11) zusammenwirkt, die zwischen zwei Endpositionen, jeweils eine eingezogene und eine ausgebreitete, beweglich sind, **dadurch gekennzeichnet, dass** der freie Rand (12) der Verdunkelungsmittel (11) in der ausgebreiteten Endposition gegen ein erstes Innenverkleidungselement (18) zum Aufliegen kommt, das sich in der Fahrgastzelle des Fahrzeugs erstreckt, wobei das erste Element (18) ausgebildet ist, um zwischen einer Ruhestellung und einer Arbeitsstellung, die der ausgebreiteten Position der Verdunkelungsmittel (11) entspricht, verstellbar zu sein, und dass das erste Element (18) mit einem zweiten Innenverkleidungselement (17) zusammenwirkt, wobei das zweite Element ausgebildet ist, um die Berührungszone zwischen dem ersten Element und den Verdunkelungsmitteln abzudecken, wenn diese Letzteren in ausgebreiteter Position sind.

2. Fahrzeug nach Anspruch 1, **dadurch gekennzeichnet, dass** die Öffnung (3) in dem Himmel (2) eingerichtet ist, und dass das erste und das zweite Element (17, 18) die Innenverkleidung (15) des vorderen Querbalkens (7) bilden.

3. Fahrzeug nach Anspruch 2, **dadurch gekennzeichnet, dass** die Verkleidung eine ununterbrochene konkave Hohlstruktur (15) bildet, die sich im Wesentlichen von der Windschutzscheibe (9) bis zu der Tafel (4) erstreckt.

4. Fahrzeug nach Anspruch 3, **dadurch gekennzeichnet, dass** die Struktur (15) eine Flugzeugflügelform und einen im Wesentlichen flachen Boden (19) und zurücktretende angehobene Ränder (20, 21, 26) hat.

5. Fahrzeug nach Anspruch 4, **dadurch gekennzeichnet, dass** das erste Element (18) den oberen Teil eines der zurücktretenden angehobenen Ränder (26) bildet.

6. Fahrzeug nach einem der Ansprüche 2 bis 4, **dadurch gekennzeichnet, dass** das erste Element (18) von dem zweiten Element (17) getrennt ist, und dass das erste Element (18) auf dem zweiten Element (17) gleitend installiert ist, und dass das erste Element (18) der Einwirkung elastischer Rückholmittel (27) unterliegt.

7. Fahrzeug nach einem der Ansprüche 2 bis 4, **dadurch gekennzeichnet, dass** das erste Element (18) von dem zweiten Element (17) getrennt ist, und dass das erste Element (18) drehend auf dem zweiten Element (17) installiert ist, und dass das erste Element (18) der Einwirkung elastischer Rückholmittel (27) unterliegt.

8. Fahrzeug nach einem der Ansprüche 2 bis 4, **dadurch gekennzeichnet, dass** das erste Element (18) von dem zweiten Element (17) getrennt ist, und dass das erste Element (18) aus einem elastischen Werkstoff hergestellt ist.

9. Fahrzeug nach einem der Ansprüche 2 bis 4, **dadurch gekennzeichnet, dass** das erste Element (18) und das zweite Element (17) einen einzigen Teil bilden, der aus elastischem Werkstoff hergestellt ist.

10. Fahrzeug nach einem der Ansprüche 2 bis 7, **dadurch gekennzeichnet, dass** die Verdunkelungsmittel mit gesteuerten Motorbedienmitteln zusammenwirken.
